# EUROPEAN PATENT SPECIFICATION

(11) **EP 0 868 001 B1**
(45) Date of publication and mention of the grant of the patent: **27.08.2003**
(21) Application number: 98102659.4
(22) Date of filing: 17.02.1998
(51) Int. Cl.: H02J 3/36

(54) **A plant for transmitting electric power**
Anlage für elektrische Leistungsübertragung
Centrale pour transmission d'énergie électrique

(30) Priority: 24.03.1997 SE 9701058
(43) Date of publication of application: 30.09.1998
(73) Proprietor: ABB AB, 721 83 Västeras (SE)
(72) Inventor: Svensson, Kjell, 771 41 Ludvika (SE); Palsson, Rolf, 772 04 Saxdalen (SE)
(74) Representative: Olsson, Jan

(56) References cited:
- GB-A- 2 002 974
- US-A- 4 459 492
- US-A- 5 535 113

## Description

### FIELD OF THE INVENTION AND PRIOR ART

The present invention relates to a plant for transmitting electric power comprising a direct voltage network having two poles and at least two alternating voltage networks connected thereto through a station each, said stations being adapted to perform transmitting of electric power between the direct voltage network and the respective alternating voltage network and comprise each at least one VSC-converter adapted to convert direct voltage to alternating voltage and conversely and an apparatus for controlling said converter, said apparatus of a first of the stations being adapted to control the converters of that station for regulating the direct voltage of the direct voltage network at this station for keeping this at a determined nominal value and the plant comprising means adapted to detect occurrence of a predetermined unbalance state in a converter of the second station and at a detection of such occurrence control a switching member to connect the direct voltage network at this station through a resistor with ground for shunting electric power.

Such a plant has recently become known through the thesis "PWM and control of two and three level high power voltage source converters" by Anders Lindberg, Kungliga Tekniska Högskolan, Stockholm, 1995, in which publication such a plant for transmitting electric power through a direct voltage network for High Voltage Direct Current (HVDC) is described. It is pointed out that the invention is not restricted to this application, but for illuminating but accordingly not limiting the invention exactly this application of plants of the type defined above will be discussed hereinafter.

Before the issuance of said thesis plants for transmitting electric power through a direct voltage network for High Voltage Direct Current have been based upon the use of line-commutated CSC (Current Source Converter) converters in stations for power transmission. By the development of IGBTs (Insulated Gate Bipolar Transistor = bipolar transistor having an insulated gate) for high voltage applications and the suitability to connect them in series in valves in converters, since they may easily be turned on and turned off simultaneously, VSC (Voltage Source Converter) converters for forced commutation have now instead become an alternative, and this type of transmission of electric power between a direct voltage network for High Voltage Direct Current being voltage stiff therethrough and alternating voltage networks connected thereto offers several important advantages with respect to the use of line-commutated CSCs in HVDC, of which it may be mentioned that the consumption of active and reactive power may be controlled independently of each other and there is no risk of commutation failures in the converter and by that no risk of transmission of commutation failures between different HVDC links, which may take place in line-commutated CSC. Furthermore, there is a possibility to feed a weak alternating voltage network or a network without a generation of its own (a dead alternating voltage network). Further advantages are also there.

In a plant of the type discussed in the introduction for HVDC with VSC-converters the direct voltage of the direct voltage network is determined by one of said stations, above called the first, and it is desired to be able to manage without any fast telecommunication between the station with the voltage regulating apparatus and the other stations along the direct voltage network, through which a power unbalance could be rapidly corrected, i.e. active power fed into the direct voltage network differs from active power fed out from the direct voltage network. The most probable unbalance occurs when a station is taken out of operation by a protection, i.e. it is blocked, in which such a blocking may have many different reasons, such as an occurrence of an over voltage or an over current of the station in question or an internal failure. If the flow of active power before the blocking of the station was from the direct voltage network to the alternating voltage network the direct voltage of the direct voltage network will increase after the blocking of the converter of the station blocked. In order to limit the over voltage occurring by this in the direct voltage network the switching members mentioned above connect the direct voltage network at this station through a resistor with ground for shunting or draining electric power. The voltage regulating station will then detect the over voltage occurring at the direct voltage network and when this has taken place regulate the voltage by changing the active current orders thereof, so that a power fed into the direct voltage network is reduced or the direction thereof is reversed until the nominal voltage and balance is achieved. A disadvantage of a plant of this type is that a voltage regulating station has to detect an over voltage of the direct voltage network before it takes care of the power unbalance problem, which mean that an over voltage has time to occur in the entire direct voltage network with a big risk that any converter thereof blocks as a consequence of this over voltage, which then could lead to an even higher voltage of the direct voltage network and wiping out of further converters and an acceleration of the process with a series of wiping out of stations as a consequence. Such wiping out may have very costly consequences.

### SUMMARY OF THE INVENTION

The object of the present invention is to provide a plant of the type defined in the introduction, which finds a remedy to the inconvenience mentioned above of the plant defined in the introduction upon occurrence of an unbalance state at the converter of the second station.

This object is according to the invention obtained by the fact that in such a plant both of said two poles of the direct voltage network at said converter of the second station are connectable to ground through a said switching member and a resistor, said means are adapted upon a detection of said unbalance state of said converter to start to alternatingly switch the two switching means in and out so as to generate a pulsating direct voltage on the two poles, and the voltage regulating station is provided with a member connected to ground and connected between the two poles of the direct voltage network and adapted to measure the ground current generated therethrough as a consequence of said alternating switching in and out and to send information thereabout to said voltage regulating apparatus of this station.

By starting such an alternating switching in and out of the switching members upon an occurrence of an unbalance state and detecting the ground current generated therethrough at the voltage regulating station this receives information about the occurrence of an unbalance already before any real over voltage has been generated on the direct voltage network, so that the apparatus of the voltage regulating station may intervene and re-establish the power balance before the over voltage in the direct voltage network has had time to increase to any such high level that there would be a risk of blocking of further converters in the plant. Thus, the voltage regulating station receives thanks to the ground current created very early information about the power unbalance, without any requirement of any fast telecommunication between the stations of the plant. Another advantage by the fact that the voltage regulation this way may be started early is that less power has to be shunted during a shorter time through the resistors, so that these may be made smaller and costs can by that be saved.

According to a preferred embodiment of the invention said means are adapted to detect blocking of said converter of the second station as said predetermined unbalance state. It is most often appropriate to try to tell the voltage regulating station that a power unbalance has been reached as soon as a protection has been triggered and the converter has been blocked.

According to another preferred embodiment of the invention the plant comprises members for measuring the direct voltage of the direct voltage network at the second station, and said means are adapted to start said alternating switching in and out of the switching members when the direct voltage measured exceeds a predetermined level. It is by such an arrangement possible to make the voltage regulating station to intervene so as to re-establish power balance of the plant already before any converter has been blocked, which may be desired in some cases.

According to another preferred embodiment of the invention the voltage regulating apparatus of the first station is adapted to register an occurrence of said predetermined unbalance state of said converter at the second station upon measuring a predetermined number of ground current pulses following directly upon each other through said ground current measuring member. By a requirement to measure a predetermined number of such ground current pulses for registrating an unbalance state, it is avoided that the voltage regulating station reacts upon different transient phenomena of the direct voltage network.

According to other preferred embodiments of the invention the plant comprises more than two stations for connection of an alternating voltage network each to the direct voltage network, and it comprises more than one second station. This means that the voltage regulating station may in a plant having more than two stations early be informed about an unbalance state of any of the second stations and take care thereof.

According to another preferred embodiment of the invention the first as well as the second station have two said switching members for connecting one own of the two poles of the direct voltage network through a resistor each to ground, means adapted upon detection of said unbalance state of a converter of the respective station to start to alternatingly switch the two switching members in and out as well as a member connected to ground, connected between the two poles of the direct voltage network and adapted to measure the ground current generated therethrough when the switching members of another station in the plant is alternatingly switched in and out, and the first as well as the second station are adapted to be able to regulate the direct voltage of the direct voltage network through a converter. A fast re-establishment of the power balance of the plant may by this be obtained irrespective of where the unbalance occurs, i.e. for example irrespectively of which converter is blocked, and with the possibility to a voltage regulation in that station where it is most appropriate at the moment.

According to a further preferred embodiment of the invention the plant is adapted for transmitting electric power through a direct voltage network for High Voltage Direct Current (HVDC). The advantages of the plant according to the invention are particularly apparent in this preferred application.

Further advantages and advantageous features of the invention will appear from the following description and the other dependent claims.

### BRIEF DESCRIPTION OF THE DRAWING

With reference to the appended drawing, below follows a description of a preferred embodiment of the invention cited as an example.

In the drawing:
- Fig. 1: is a very schematic diagram illustrating the principles of the invention,
- Fig. 2: consists of graphs illustrating the progress of some electric quantities over the time upon occurrence of an unbalance in one of the stations of the plant according to Fig. 1, more exactly a blocking of converter of this plant.

### DETAILED DESCRIPTION OF A PREFERRED EMBODIMENT OF THE INVENTION

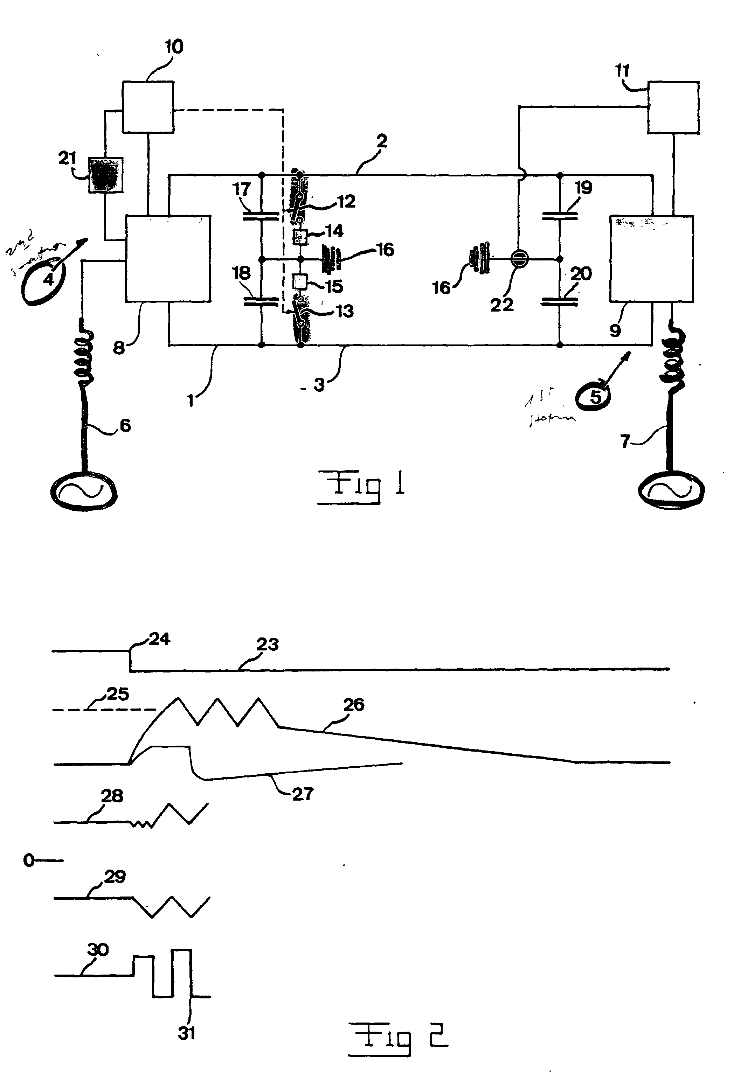

A structure of a plant for transmitting electric power according to the invention is very schematically and simplified illustrated in Fig. 1, in which only the different components having directly something to do with the function according to the invention have been shown in the drawing for facilitating the comprehension of the invention. The plant comprises a direct voltage network having a plus pole 2 and a minus pole 3 for High Voltage Direct Current (HVDC = High Voltage Direct Current), and in the present case two alternating voltage networks 6, 7 connected to the direct voltage network through a station 4, 5, the networks last mentioned being indicated by an alternating voltage symbol and an inductance. The stations are adapted to perform transmission of electric power between the direct voltage network 1 and the respective alternating voltage network, in which the power may be fed in from an alternating voltage network to the direct voltage network or fed out from the direct voltage network to an alternating voltage network. Thus, the alternating voltage network may have generators of electric power or only be connected to consumers thereof. The stations comprise each at least one VSC-converter 8, 9 adapted to convert direct current to alternating current and conversely. However, it is possible that each station comprises a plurality of such converters, but these are in the present case summarised through one single box for each station. It is also possible that the alternating voltage networks have more than one phase, most often three phases, but the phases of the alternating voltage networks are summarised in the figure through one single line. The respective SiC-converter comprises in a conventional way so called valves, which consist of branches having breakers of turn-on and turn-off type connected in series, preferably in the form of IGBTs, and diodes connected in anti-parallel therewith in a conventional way. A great number of IGBTs may for example be connected in series in one single valve, so as to be turned on and turned off simultaneously for functioning as one single breaker, wherethrough the voltage drop over the valve is distributed among the different breakers connected in series. Control of the breakers takes place in a conventional way through pulse-width-modulation (PWM).

The stations comprise further a schematically indicated apparatus 10, 11 each for controlling the respective converter 8, 9. One of the stations 5 is intended to be in voltage regulating mode, namely the first station 5, which means that the control apparatus 11 thereof controls the converter 9 for regulating the direct voltage of the direct voltage network in this station for keeping this at a determined nominal value. The two poles 2, 3 of the direct voltage network is at the second station 4 connected to ground 16 through a switching member 12, 13 each, which in the present case are components of turn-on and turn-off type in the form of IGBTs, and a resistance 14, 15 each. Ground 16 is with respect to the voltage located in the middle of the plus and minus pole through connection thereof to a branch having two capacitors 17, 18 and connecting the poles between these capacitors. Corresponding capacitors 19, 20 and ground connection are there for the first station.

It is further illustrated how the control apparatus 10 of the second station is designed to also control the two switching members 12 and 13. The second station has in addition thereto means 21 adapted to detect an occurrence of a predetermined unbalance state at the converter 8 at this station, in which such a detection may for example mean a detection of an increasing voltage of the direct voltage network or a triggering of a protection blocking the converter.

Finally, the first station has a member 22, which is connected between ground 16 and a point between the capacitors 19 and 20 between the two poles of the direct voltage network so as to measure the ground current flowing therethrough and send information thereabout to the control apparatus 11.

The plant described above functions in the following way when an unbalance occurs at the second station 4, which may consist of an increase of the direct voltage therein or a blocking of any converter of that station. This unbalance is detected by the means 21, which by this sends signals to the apparatus 10 for controlling the switching members 12 and 13 to alteratingly establish and break the connections thereof with ground. This means that the electric power may be shunted through the associated resistor when a switching member 12 or 13 is switched in, which counteracts the power unbalance and an increase of the direct voltage of the direct voltage network. By alteratingly switching the switching members 12 and 13 in an out a pulsating direct voltage will be generated on the two poles 2, 3 and a ground current is generated through the member 22 of the voltage regulating station 5, which through signals from the member 22 to the control apparatus 11 discover said unbalance and begins to reduce the power fed in so as to counteract this unbalance and prevent a rise of the direct voltage of the direct voltage network to levels being harmful. Thus, through the alternating switching of the switching members 12 and 13 in and out as of the occurrence of an unbalance, this unbalance state may be detected at the voltage regulating station before the direct voltage of the direct voltage network has increased substantially, although there is no telecommunication between the two stations in question.

The development of the following quantities over time is illustrated in Fig. 2. The line 23 shows the state of the converter 8 of the second station, in which it is blocked at the point 24. The development of the direct voltage between the two poles of the plant is illustrated below this line on one hand in the plant already known, in which voltage regulating station detects blocking of a converter of the second station by detecting an increase of the direct voltage of the network over a predetermined level 25, through the line 26, on the other the development of the direct voltage between the poles of a plant according to Fig. 1 through the line 27. The lines 28 and 29 further illustrate the potentials of the poles 2 and 3 of the direct voltage network, respectively, while the line 30 illustrates the ground current measured by said member 22. In comparison of the lines 26 and 27 it appears that the detection of the blocking of the converter of the plant according to the invention considerably earlier means that the direct voltage will not at all increase to the same high level as in the plant known before, so that a risk of wiping out other converters and the direct voltage increases further is almost eliminated. Furthermore, it appears that the apparatus of the voltage regulating station is designed to first register a certain number of ground current pulses, in the present case three, before it begins the regulation thereof so as to re-establish the power balance of the plant so as to avoid unnecessary regulation of the occurrence of different types of transients. Thus, the voltage regulating station begins at the regulation for taking care of the unbalance at the point of time 31 of the curve 30.

By minimising the process in this way, i.e. it is only necessary to obtain switching in and out of the resistors for re-establishing the power balance, the power demands upon the resistors are reduced, so that these may be made smaller and by that less costly.

The invention is of course not in any way restricted to the embodiment described above, but a plurality of possibilities to modifications thereof would be apparent to a man skilled in the art, without departing from the basic idea of the invention.

Although symbols have been indicated in Fig. 1 for certain members, means or the like, it is not at all necessary that these exist as separate components, but the functions they have to fulfil may very well be ensured by any component having also other tasks and for example values not be measured directly but calculated from values of any other quantity measured.

It is also obvious that a plant of this type has a series of further components, such as harmonic filters, different regulating loops and the like, but these have been omitted, since they are not essential for the present invention.

The definition "keeping this at a determined nominal value" also comprises maintaining the direct voltage value within a predetermined interval allowed.

"Through a switching member each and a resistor each" in the claims is to be given a broad meaning and covers also the equivalence to arrange a diverter where the protection level is set close to the nominal direct voltage. The process will be rather similar to the case with resistors instead, but the characteristic of the diverter is strongly unlinear and the protection will be current depending.

## Claims

1. A plant for transmitting electric power comprising a direct voltage network (1) having two poles (2, 3) and at least two alternating voltage networks (6, 7) connected thereto through a station (4, 5) each, said stations being adapted to perform transmitting of electric power between the direct voltage network and the respective alternating voltage network and comprise each at least one VSC-converter (8, 9) adapted to convert direct voltage to alternating voltage and conversely and an apparatus (10, 11) for controlling said converter (8, 9), said apparatus of a first (5) of the stations being adapted to control the converter of that station for regulating the direct voltage of the direct voltage network at this station for keeping this at a determined nominal value and the plant comprising means (21) adapted to detect occurrence of a predetermined unbalance state in a converter of the second station (4) and at a detection of such occurrence control a switching member (12, 13) to connect the direct voltage network at this station through a resistor (14, 15) with ground (16) for shunting electric power, **characterized in that** both of said two poles (2, 3) of the direct voltage network at said converter (8) of the second station (4) are connectable to ground (16) through a said switching member (12, 13) and a resistor (14, 15), said means (21) are adapted upon a detection of said unbalance state of said converter (8) to start to alternatingly switch the two switching means (12, 13) in and out so as to generate a pulsating direct voltage on the two poles (2, 3), and the voltage regulating station (9) is provided with a member (22) connected to ground (16) and connected between the two poles (2, 3) of the direct voltage network and adapted to measure the ground current generated therethrough as a consequence of said alternating switching in and out and to send information thereabout to said voltage regulating apparatus of this station.

2. A plant according to claim 1, **characterized in that** said means (21) are adapted to detect a blocking of said converter (8) of the second station as said predetermined unbalance state.

3. A plant according to claim 1, **characterized in that** it comprises members (21) for measuring the direct voltage at the direct voltage network at said second station, and that said means are adapted to start said alternating switching in and out of the switching members (12, 13) when the direct voltage measured exceeds a predetermined level.

4. A plant according to any of claims 1-3, **characterized in that** the voltage regulating apparatus (11) of the first station is adapted to register an occurrence of said predetermined unbalance state of said converter at said second station (4) when a predetermined number of ground current pulses following directly upon each other is measured through said ground current measuring members.

5. A plant according to claim 4, **characterized in that** said determined number is lower than five.

6. A plant according to claim 4 or 5, **characterized in that** said predetermined number is at least three.

7. A plant according to any of claims 1-6, **characterized in that** it comprises more than two stations (4, 5) for connection of an alternating voltage network (6, 7) each to the direct voltage network (1), and that it comprises more than one second station (4).

8. A plant according to any of claims 1-7, **characterized in that** the first as well as the second station (4) have two said switching members (12, 13) for connecting one own of the two poles (2, 3) of the direct voltage network through a resistor (14, 15) each to ground, means (21) adapted upon detection of said unbalance state of a converter of the respective station to start to alternatingly switch the two switching members (12, 13) in and out as well as a member (22) connected to ground, connected between the two poles (2, 3) of the direct voltage network (1) and adapted to measure the ground current generated therethrough when the switching members of another station in the plant is alternatingly switched in and out, and that the first (5) as well as the second station (4) are adapted to be able to regulate the direct voltage of the direct voltage network through a converter (8, 9) .

9. A plant according to any of claims 1-8, **characterized in that** it is adapted for transmitting electric power through a direct voltage network (1) for High Voltage Direct Current (HVDC).

## Patentansprüche

1. Anlage zur Übertragung elektrischer Energie, bestehend aus einem Gleichspannungsnetzwerk (1), das zwei Pole (2, 3) und wenigstens zwei Wechselspannungsnetzwerke (6, 7) hat, die damit über eine Station (4, 5) verbunden sind, wobei jede Station die Übertragung elektrischer Energie zwischen den Gleichspannungsnetzwerk und dem jeweiligen Wechselspannungsnetzwerk durchführen kann und jedes wenigstens einen VSC-Wandler (8, 9) aufweist, der Gleichspannung in Wechselspannung und umgekehrt umwandeln kann, sowie eine Einrichtung (10, 11) zum Steuern des Wandlers (8, 9), wobei die Einrichtung einer ersten (5) der Stationen den Wandler dieser Station steuern kann, um die Gleichspannung des Gleichspannungsnetzwerks an dieser Station zu regeln, um sie auf einem vorbestimmten Nennwert zu halten, und wobei die Anlage Mittel (21) aufweist, die das Auftreten eines vorbestimmten Ungleichgewichtszustands in einem Wandler der zweiten Station (4) ermitteln, und bei einer Ermittlung solch eines Auftretens ein Schaltelement (12, 13) steuern kann, das Gleichspannungsnetzwerk an dieser Station über einen Widerstand (14, 15) mit Masse (16) zum Nebenschließen elektrischer Energie zu verbinden,
**dadurch gekennzeichnet, dass**
beide Pole (2, 3) des Gleichspannungsnetzwerks an dem Wandler (8) der zweiten Station (4) über eines der Schaltelemente (12, 13) und einen Widerstand (14, 15) mit Masse (16) verbindbar sind, die Mittel (21) bei Ermittlung des Ungleichgewichtszustands des Wandlers (8) in der Lage sind, zu beginnen, abwechselnd die beiden Schaltelemente (12, 13) ein- und auszuschalten, um eine pulsierende Gleichspannung an den beiden Polen (2, 3) zu erzeugen, und die Spannungsreglerstation (9) mit einem Element (22) versehen ist, das mit Masse (16) verbunden und zwischen die beiden Pole (2, 3) des Gleichspannungsnetzwerks geschaltet und in der Lage ist, den dadurch erzeugten Massestrom als eine Folge des wechselnden Ein- und Ausschaltens zu messen und eine Information darüber zur Spannungsreglereinrichtung dieser Station zu senden.

2. Anlage nach Anspruch 1,
**dadurch gekennzeichnet, dass**
die Mittel (21) in der Lage sind, eine Sperrung des Wandlers (8) der zweiten Station als das vorbestimmte Ungleichgewicht zu ermitteln.

3. Anlage nach Anspruch 1,
**dadurch gekennzeichnet, dass**
sie Elemente (21) zum Messen der Gleichspannung am Gleichspannungsnetzwerk an der zweiten Station aufweist, und dass die Mittel in der Lage sind, das wechselnde Ein- und Ausschalten der Schaltelemente (12, 13) zu beginnen, wenn die gemessene Gleichspannung einen vorbestimmten Pegel überschreitet.

4. Anlage nach einem der Ansprüche 1 bis 3,
**dadurch gekennzeichnet, dass**
die Spannungsreglereinrichtung (11) der ersten Station in der Lage ist, das Auftreten des vorbestimmten Ungleichgewichtszustands des Wandlers an der zweiten Station (4) zu registrieren, wenn eine vorbestimmte Anzahl von Massestromimpulen, die direkt aufeinanderfolgen, durch die Massestrommesselemente gemessen wird.

5. Anlage nach Anspruch 4,
**dadurch gekennzeichnet, dass**
die bestimmte Anzahl niedriger als fünf ist.

6. Anlage nach Anspruch 4 oder 5,
**dadurch gekennzeichnet, dass**
die vorbestimmte Anzahl wenigstens drei ist.

7. Anlage nach einem der Ansprüche 1 bis 6,
**dadurch gekennzeichnet, dass**
sie mehr als zwei Stationen (4, 5) zum jeweiligen Anschließen eines Wechselspannungsnetzwerks (6, 7) an das Gleichspannungsnetzwerk (1) aufweist, und dass sie mehr als eine zweite Station (4) hat.

8. Anlage nach einem der Ansprüche 1 bis 7,
**dadurch gekennzeichnet, dass**
die erste ebenso wie die zweite Station (4) zwei solche Schaltelemente (12, 13) jeweils zum Verbinden eines der beiden Pole (2, 3) des Gleichspannungsnetzwerks über einen Widerstand (14, 15) jeweils mit Masse, Mittel (21), die in der Lage sind, bei Ermittlung des Ungleichgewichtszustands eines Wandlers der jeweiligen Station in der Lage sind, zu beginnen, die beiden Schaltelemente (12, 13) abwechselnd zu schalten, ebenso wie ein Element (22) aufweist, das mit Masse verbunden ist, zwischen die beiden Pole (2, 3) des Gleichspannungsnetzwerks (1) geschaltet und in der Lage ist, den dadurch erzeugten Massestrom zu messen, wenn die Schaltelemente einer anderen Station in der Anlage abwechselnd ein- und ausgeschaltet werden, und dass die erste (5) ebenso wie die zweite Station (4) in der Lage sind, die Gleichspannung des Gleichspannungsnetzwerks durch einen Wandler (8, 9) zu regulieren.

9. Anlage nach einem der Ansprüche 1 bis 8,
**dadurch gekennzeichnet, dass**
sie in der Lage ist, elektrische Energie durch ein Gleichspannungsnetzwerk (1) für Hochspannungsgleichstrom (HFDC) zu übertragen.

## Revendications

1. Installation pour transmettre de l'énergie électrique, comportant un réseau (1) à tension continue ayant deux pôles (2, 3) et au moins deux réseaux (6, 7) à tension alternative qui y sont reliés par l'intermédiaire d'un poste (4, 5) chacun, les postes étant conçus pour effectuer une transmission d'énergie électrique entre le réseau à tension continue et le réseau à tension alternative respectif et comportent chacun au moins un convertisseur (8, 9) VSC conçu pour convertir de la tension continue en de la tension alternative et inversement, et un dispositif (10, 11) destiné à commander les convertisseurs (8, 9), le dispositif d'un premier (5) des postes étant conçu pour commander le convertisseur de ce poste pour réguler la tension continue du réseau à tension continue à ce poste, pour le maintenir à une valeur nominale déterminée, et l'installation comportant des moyens (21) conçus pour détecter l'apparition d'un état de déséquilibre déterminé à l'avance dans un convertisseur du deuxième poste (4) et, lors d'une détection d'une apparition de ce genre, pour commander un élément (12, 13) de commutation, pour connecter le réseau à tension continue à ce poste par l'intermédiaire d'une résistance (14, 15) avec la terre (16) pour effectuer une dérivation de l'énergie électrique, **caractérisée en ce que** les deux pôles (2, 3) du réseau à tension continue au convertisseur (8) du deuxième poste (4) peuvent tous les deux être connectés à la terre (16) par l'intermédiaire de l'élément (12, 13) de commutation et d'une résistance (14, 15), les moyens (21) sont conçus pour, lors d'une détection dudit état de déséquilibre du convertisseur (8), commencer à commuter en alternance les deux moyens (12, 13) de commutation à l'ouverture et à la fermeture, de manière à produire une tension continue de pulsation sur les deux pôles (2, 3), et le poste (9) de régulation de tension est muni d'un élément (22) relié à la terre (16) et relié entre les deux pôles (2, 3) du réseau à tension continue et conçu pour mesurer le courant de terre produit à travers celui-ci en conséquence de la commutation à l'ouverture et à la fermeture en altemance et pour envoyer des informations à ce sujet au dispositif de régulation de tension de ce poste.

2. Installation suivant la revendication 1, **caractérisée en ce que** les moyens matériels sont conçus pour détecter un blocage du convertisseur (8) du deuxième poste en tant qu'état de déséquilibre déterminé à l'avance.

3. Installation suivant la revendication 1, **caractérisée en ce qu'**elle comporte des éléments (21) pour mesurer la tension continue au réseau de tension continue au deuxième poste, et **en ce que** les moyens sont conçus pour commuter en alternance à l'ouverture et à la fermeture les éléments de commutation (12, 13) lorsque la tension continue mesurée dépasse un niveau déterminé à l'avance.

4. Installation suivant l'une quelconque des revendications 1 à 3, **caractérisée en ce que** le dispositif (11) de régulation de tension du premier poste est conçu pour enregistrer une apparition dudit état de déséquilibre déterminé à l'avance du convertisseur au deuxième poste (4) lorsqu'un nombre déterminé à l'avance d'impulsions de courant de terre qui se suivent directement les unes les autres est mesuré par les éléments de mesure de courant de terre.

5. Installation suivant la revendication 4, **caractérisée en ce que** le nombre déterminé est inférieur à 5.

6. Installation suivant la revendication 4 ou 5, **caractérisée en ce que** le nombre déterminé à l'avance est d'au moins 3.

7. Installation suivant l'une quelconque des revendications 1 à 6, **caractérisée en ce qu'**elle comporte plus que deux postes (4, 5) pour la connexion d'un réseau (6, 7) à tension alternative chacun au réseau (1) de tension continue, et **en ce qu'**elle comporte plus qu'un deuxième poste (4).

8. Installation suivant l'une quelconque des revendications 1 à 7, **caractérisée en ce que** le premier ainsi que le deuxième poste (4) ont deux éléments (12, 13) de commutation pour une connexion de l'un propre des deux pôles (2, 3) du réseau à tension continue par l'intermédiaire de résistances (14, 15) chacun à la terre, des moyens (21) conçus lors de la détection dudit état de déséquilibre d'un convertisseur du poste respectif pour commencer à commuter en alternance à l'ouverture et à la fermeture les deux éléments (12, 13) de commutation, ainsi qu'un élément (22) relié à la terre, connecté entre les deux pôles (2, 3) du réseau (1) à tension continue, et conçu pour mesurer le courant de terre produit dans celui-ci lorsque les éléments de commutation d'un autre poste dans l'installation sont commutés à l'ouverture et à la fermeture en alternance, et **en ce que** le premier (5) ainsi que le deuxième poste (4) sont conçus pour être capables de réguler la tension continue du réseau à tension continué par l'intermédiaire d'un convertisseur (8, 9).

9. Installation suivant l'une quelconque des revendications 1 à 8, **caractérisée en ce qu'**elle est conçue pour transmettre de l'énergie électrique par l'intermédiaire d'un réseau (1) à tension continue pour du courant continu à haute tension (HVDC).
